# EUROPEAN PATENT SPECIFICATION

(11) **EP 0 520 953 B1**
(45) Date of publication and mention of the grant of the patent: **02.10.1996**
(21) Application number: 92810495.9
(22) Date of filing: 29.06.1992
(51) Int. Cl.: B01D 46/04, B01D 46/24

(54) **Apparatus for moving and treating particles**
Vorrichtung zum Bewegen und Behandeln von Teilchen
Appareil pour déplacer et manipuler des particules

(30) Priority: 28.06.1991 US 723177
(43) Date of publication of application: 30.12.1992
(73) Proprietor: GLATT AIR TECHNIQUES, INC., Ramsey NJ,07446 (US)
(72) Inventor: Olsen, Kenneth W., Montvale, NJ 07645 (US); Smith, Richard A., Ringwood, NJ 07456 (US)
(74) Representative: Eder, Carl E.

(56) References cited:
- EP-A- 0 089 114
- EP-A- 0 430 008
- US-A- 4 588 366
- US-A- 4 645 520

## Description

This invention relates to an apparatus for moving, particularly fluidizing, and treating particles according to the preamble of claim 1.

Known fluidized bed apparatuses and similar apparatuses for moving and treating particles comprise a processing chamber for accomodating the particles and a filter housing that is disposed above the processing chamber and contains filtering means. The known apparatuses comprise also means to pass processing gas upwardly through the processing chamber and the filter means.

The US-A-4 588 366 discloses for instance apparatuses in which a base plate separates the interior of the filter housing at the lower end thereof from the interior of the processing chamber disposed below the filter housing, wherein partition means divide the interior of the filter housing into two or more compartments. Each of these filter housing compartments contains several filter elements and is provided with a gas outlet comprising a flap. The lower ends of the filter elements are open and fastened around bores of the base plate. The closed upper ends of the filter elements are suspended over rods. During operation, processing gas flows upwardly through the processing chamber, through the bores of the base plate into the interior of the filter elements, through the latter into the free interior space portions of the filter housing compartments and then through the gas outlets. These outlets can be closed by means of the flaps for cleaning the filter elements in the associated filter housing compartment. The cleaning operation can then be done by transmitting vibrations over said rods to the upper ends of the filter elements.

As the filter elements described in the US-A-4 588 366 consist in practice of weak, flexible cloth bags, they must be fastened at both ends by relatively complicated fastening means. This increases the costs of the apparatuses and renders the changing of the filter elements that may possibly be necessary from time to time very complicated and time consuming. The mechanical means which must be provided for vibrating the filter elements during a cleaning operation involves considerable expense and requires a considerable degree of maintenance.

The US-A-4 645 520 discloses a fluidized bed apparatus with a vessel having a filter housing containing several filter cartridges. The filter cartridges have open upper ends which are attached by means of a supporting ring to a horizontal plate, wherein the latter is provided with a bore for each filter cartridge. Each filter cartridge contains an immersion tube connected by a valve with a compressor. A bellows adapted to be blown up is disposed on each immersion tube within the associated supporting ring. The bellows is during normal operation in a relaxed state in which processing gas can flow through a gas-permeable filter hose of the associated filter cartridge into the interior of the filter cartridge and then through a free annular passage between the supporting ring and the bellows out from the filter cartridge. From time to time pressurized air serving as cleaning gas is supplied to a filter cartridge for cleaning the latter. This pressurized air blows the bellows up so that the flow of gas through the annular passage between the supporting ring and the bellows is throttled or possibly interrupted momentarily. The filter hose is then blown up so that it can shake off adhering dust.

If one of the filter cartridges is cleaned in this way, processing gas may flow at the same time into and through the other filter cartridges. As any momentarily cleaned filter cartridge is separated from the neighbouring filter cartridges merely by relatively narrow free, empty portions of the interior space of the filter housing, the dust particles discharged from a cleaned filter cartridge will come into the upwardly flowing processing gas before the dust particles have fallen down into the fluidized bed formed by the particles below the filter cartridges in the processing chamber. The discharged dust particles are typically very fine and can't hardly resist the flow of the processing gas. Therefore, the particles discharged from a filter cartridge may be drawn to at least one other filter cartridge which remains in operation, thereby overloading the operational filter cartridge with particles from the cartridge being cleaned. As the annular passage at the upper end of the cleaned filter cartridge is only constricted during the cleaning operation or blocked at most only momentarily, it may even happen that dust particles discharged from a filter cartridge are drawn back to the filter cartridge from which they came.

The US-A-4 953 308 discloses a fluidized bed apparatus which comprises also filter cartridges that are mounted in an undivided filter housing and can be cleaned by pressurized air. Therefore, the cleaning of a filter cartridge of this apparatus requires the particles to discharge against a counter-current formed by the processing gas similarly as in case of the previously described apparatus known from the US-A-4 645 520. Accordingly, the apparatus disclosed in the US-A-4 953 308 has similar drawbacks as the apparatus according to the US-A-4 645 520. As the outlet openings of the various filter cartridges disclosed in the US-A-4 953 308 can't be closed at all, the risk that discharged dust particles are drawn back by the processing gas to the filter cartridge from which they came is even greater than in case of the apparatus known from the US-A-4 645 520.

Therefore, the cleaning of the filter cartridges of the apparatuses disclosed by the US-A-4 645 520 and US-A-4 953 308 is very inefficient. As already explained, particles discharged from a filter cartridge may be drawn to another filter cartridge which remains in operation or even back to the filter cartridge from which they came. This results in the cartridges having to be cleaned more frequently, which is expensive, as well as having to change the filters more frequently. Because particles discharged from a filter cartridge during the cleaning of this filter cartridge do not get reintroduced into the fluidized bed, the efficiency of the treatment of particles is diminished. For example, during an agglomeration process, because some of the fine particles do not get reintroduced into the fluidized bed, these unagglomerated particles could result in a product having content uniformity problem. Similarly, in a coating process, the particles that do not get reintroduced into the fluidized bed will result in a product having uncoated particles that will compromise the quality of the product.

The EP-A-0 430 008 discloses a filter unit with a casing. The latter includes a vertical partition wall dividing the upper portion of the interior of the casing into two compartments. Each compartment contains a group of filter tubes. A dust container is disposed below the filter tubes. Each of the two groups of filter tubes is connected over a gas outlet of the casing and over an on/off valve with a common suction pipe. The filter unit comprises shaker means for shaking and cleaning the filter tubes. The known filtering unit is intended for filtering air in the environments of dust generating machines, such as orbital tools. Hence, this filter unit does not serve to move and treat particles which are designated to constitute a product. Moreover, the shaker means imply similar drawbacks as the already described means for vibrating the filter elements of the US-A-4 588 366.

The invention is therefore based on the task of avoiding disadvantages of the known apparatuses. More specifically and starting from the apparatus known from US-A-4 588 366, the invention shall provide an apparatus with filter means and cleaning means that can be provided at low costs and enable an easy maintenance of the filter means.

This task is solved according to the invention by an apparatus comprising the characteristics of claim 1.

The apparatus is adapted that the particles can be moved and treated within the chamber so that the latter serves as processing chamber. More in particular, the apparatus may consist of a fluidized bed apparatus and comprising a processing chamber within which the particles to be treated can be whirled up by the processing gas - such as air - streaming upwardly through the processing chamber.

The apparatus may also comprise a rotor rotatable around a vertical axis and comprising a disc having a substantially plane and horizontal surface and a cap that is arranged in the central portion of the upper side of the disc and that is at least in part tapering upwardly. Such a rotor may be for instance similar to the rotor shown in the cited US-A-4 588 366. The rotor can then limit the interior of a processing chamber at the lower end thereof. During operation, the rotor can be in a position in which an annular gap arises between the wall of the processing chamber and the disc so that the processing gas can flow in an upward direction through the gap and the chamber. Moreover, the rotor may be rotated. A fraction of the particles may then lie on the rotor and form a bed on the latter. The rotation of the rotor can then move at least the particles being in the lower portion of said bed outward. When the particles reach the annular gap, the processing gas may temporarily lift them, wherein the particles may be fluidized or not fluidized thereby. The lifted particles fall then back on the rotor.

The apparatus may comprise a casing with a vertical axis and comprising several detachably connected parts forming the filter housing and the chamber positioned below the filter housing. The filter housing possesses preferably a wall with a substantially cylindrical wall portion, i.e. a jacket or mantle. The chamber may comprise for instance a lower, substantially cylindrical section and an upper, substantially conical section being adjacent to the filter housing and having an interior widening upwardly. The lower, cylindrical section may then serve as processing section and lodge during operation at least the major part of the particles moved and treated, whereas the upper, conical section may serve as expansion section enabling an expansion of the processing gas. However, it is also possible that the entire chamber is widening conically in an upward direction and serves as processing and/or as expansion chamber. Moreover, one may provide a chamber that is cylindrical up to the filter housing or comprises even a section that is conically tapering in an upward direction.

The apparatus according to the invention may serve for agglomerating particles and/or for granulating particles and/or for coating particles and/or for layering a finer powder onto particles and/or for drying particles.

The apparatus of this invention includes two or more downwardly-opening, open-bottom compartments or chambers defined in the filter housing with each compartment including at least one filter cartridge. Each filter cartridge is preferably substantially tubular and possesses preferably a substantially rigid and stiff wall with a generally axial, tubular and for instance substantially cylindrical wall portion or jacket encompassing an axis of the filter cartridge. This substantially cylindrical wall portion or jacket can for instance be provided with waves and/or folds distributed along the periphery of the wall portion or jacket and extending parallel to the axis of the filter cartridge. The axial wall portion may then be in cross-section for instance substantially circular, but comprise superposed waves and/or a superposed zigzag form. Such waves and/or folds may considerably increase the surface of the generally cylindrical wall portion or jacket. Such waves and/or folds are moreover increasing the axial stiffness, i.e. the resistance against axial compressions. However, it might also be possible to provide the filter cartridges with a cylindrical wall portion or jacket that is free of waves and/or folds and, thus, completely circular in cross-section. It is moreover possible to provide filter cartridges having an axial, substantially tubular wall portion that is in cross-section substantially elliptic or oval or polygonal. This axial wall portion may possibly comprise in addition small axial waves and/or folds superposed to the general elliptic or oval or polygonal cross-sectional form.

Each filter cartridge comprises preferably at one end an end wall portion that may be substantially plane and radial. The other end and the interior of the filter cartridge are preferably open. The end wall portion may for instance comprise a central opening. The filter cartridge may then be mounted by fastening means comprising for instance a threaded stud or shank penetrating the opening in the end wall and a nut. The other, open end of the filter cartridge may then be pressed by the force produced by the nut or other fastening means against a mounting or supporting member such as mounting plate or ring. Such fastening means enable a quick, easy mounting and removal of the filter cartridge.

At least a part of the wall of each filter - namely at least the substantially axial and tubular wall portion or jacket - of each filter cartridge is gas-permeable. The end wall portion of the filter cartridges may be gas-tight or also at least in part gas-permeable. The processing gas can then pass through the gas-permeable wall part, whereby the latter can retain dust-particles.

Each compartment of the filter housing is provided with a processing gas outlet for the processing gas consisting for instance of air. Each outlet is equipped with a gas flow on/off valve means downstream from the associated cartridge. These multiple outlets may in turn open into a single discharge duct, through a multiple arm collection and/or connection fitting, which may also include a gas flow controlling valve.

There are also provided cleaning gas input means adapted to discharge cleaning gas, such as air, under pressure selectively within the interior of the various filter cartridges for cleaning the cartridges.

The downwardly-opening compartments are defined by partition means or structures which extend vertically not only the full extent of the upper filter housing of the apparatus but also downwardly into the chamber positioned below the filter housing and being adjacent to the latter. This chamber may serve - as already mentioned - as processing and/or expansion chamber of the apparatus.

The flow of outlet gas, or processing gas, from the processing chamber containing for instance a fluidized bed can be effectively bypassed through a filter cartridge or group of filter cartridges during a cartridge cleaning operation which is effected by the discharge of cleaning gas - such as high pressure air - within the interior of the filter cartridge.

By extending the partition means downwardly into the chamber disposed below the filter housing, particles discharged from the exterior of the filter cartridge fall downwardly through substantially "dead" air or gas space within the corresponding downwardly-opening compartment, and thereafter for instance downwardly into a fluidized bed and/or onto a rotor below the partition means.

The discharged particles are not discharged against any substantial counter-current processing gas flow. In this manner, a considerable portion of the particles discharged from the exterior of a cartridge filter during cleaning falls down into the chamber serving for accomodating and processing the particles thus reintroducing such particles into the system and reducing the amount of particulate material that might otherwise migrate to another filter cartridge. Thus, the time interval between having to pulse or clean the cartridges may be increased and the time interval between replacement of filter cartridges may be increased.

The apparatus according to the invention thus may serve for agglomerating and/or granulating and/or coating particles and/or for layering powder onto particles and/or for drying particles, wherein the apparatus comprises unique and efficient filtering means utilizing a plurality of cartridge-type air, or other gas, filters. The cleaning gas input means are operatively associated with each filter cartridge and selectively operable to discharge cleaning gas under pressure within the interior of the filter cartridge in order to blow or dislodge filtered material accumulated on the exterior of the filter cartridge therefrom.

According to a favorable execution of the invention, there may be provided an apparatus, particularly a fluidized bed apparatus, such as a particle coater/granulator/agglomerator/drier, in accordance with the preceding paragraph, wherein each of the filter cartridges associated with a gas outlet of the apparatus is contained within a separate downwardly-opening filter housing compartment through the utilization of partition means with a partition, or baffle, structure that divides the housing. The partition or baffle structure may project downwardly below the lower limit of the filter housing of the apparatus and into the upper portion of the processing and/or expansion chamber of the apparatus, whereby the material blown from the exterior of one filter cartridge may fall back down into the processing and/or expansion chamber.

As each gas outlet is associated with a gas flow on/off valve means downstream from the filter cartridge, the flow of processing gas through the filter cartridge may be terminated during a filter cartridge cleaning operation.

According to the invention, the apparatus is provided with multiple gas outlets that are joined into a single discharge duct downstream from the gas flow on/off valve means mentioned in the preceding paragraph. The discharge duct in turn, is provided with a modulating gas flow controlling valve.

The apparatus according to the invention is equipped with multiple, individual gas outlet filter cartridges which will conform to conventional forms of manufacture, may be of simple construction, and may be dependable and efficient in operation.

The subject of the invention and additional advantages thereof are now described on the basis of an embodiment illustrated in the accompanying drawings. In the drawings
Figure 1 is a fragmentary schematic front elevational view of a fluidized bed apparatus, such as a particle coater/granulator/agglomerator/drier, with product bottom discharge and with portions of the near housing wall sections being broken away to illustrate more clearly the internal structural features associated with the instant invention;
Figure 2 is a reduced top plan view of the apparatus of Figure 1;
Figure 3 is an elevational view of one of the gas filter cartridge support frames of the invention over which an associated tubular gas filter cartridge may be removably supported; and
Figure 4 is an end elevational view of the support frame illustrated in Figure 3, seen from below.

Referring to the drawings, the numeral 10 generally designates a fluidized bed apparatus, such as a particle coater/granulator/drier of the type hereinbefore set forth. Fluidized bed systems are well known in the art, see e.g., those disclosed in US-A-4 688 366 and US-4 953 308. The apparatus 10 includes a casing with a hollow upper section or filter housing 12 which opens downwardly into a downwardly tapering expansion section of a processing and expansion chamber 14, the lower end of the processing and expansion chamber typically opening downwardly into a product container and processing section (not shown) in turn terminating downwardly in a lower plenum (not shown). In addition, the upper section or filter housing 12 has an upper bonnet 16 disposed thereover comprising an explosion vent, which could be horizontal or vertical. The interior of the the upper section or filter housing 12 communicates with the bonnet or explosion vent 16 through normally closed explosion relief plates 18 and 20.

The interior of the upper section or filter housing 12 is divided into a plurality of individual downwardly opening compartments or chambers 22 and 24 through the utilization of partition means with a vertical partition 26. If the interior of the upper section or filter housing 12 is to be divided into only two chambers as shown, the partition 26 divides the interior of the cylindrical filter housing 12 into semi-circular compartments 22 and 24. More than two compartments may be provided with multiple partitions.

Each compartment 22 and 24 includes a processing, i.e. fluidizing gas outlet 28 including a tubular, internal outlet fitting 30 projecting into the corresponding compartment and having a circular inlet end 32 and an outlet end 34. Each of the gas outlets 28 opens outwardly through the wall of the upper section or filter housing 12 through an exhaust fitting 38. Each fitting 38 discharges through a butterfly-type on/off control valve 40 including a remotely operable actuator 42 opening into one leg 44 of a collection fitting 43. The latter comprises a discharge pipe 46, in turn discharging into a discharge duct 48 equipped with a continuously, variable, or modulating, butterfly-type air flow control valve 50 including a remotely operable actuator 52. On/off control valves and modulating type control valves are well known in the art.

A mounting member 56 consisting for instance of a circular, substantially plane mounting plate 56 is provided for each outlet fitting 30, comprises an aperture 57 defining a passage for the processing gas and is secured to the inlet end 32 of the outlet fitting 30 by not shown fastening means. It is remarked that one could provide instead of individual mounting plates a common, apertured mounting member or plate for all - i.e. both - outlet fittings. Three support rods 58 are mounted onto the mounting member or plate 56 through the utilization of clamping nuts 60. The rods 58 are equally distributed around the axis of a filter cartridge 70 to be supported. The rods 58 are peripherally spaced, i.e. spaced along the periphery of the filter cartridge 70. The ends of the rods 58 remote from the mounting member or plate 56 are interconnected by a triangular frame 62 including a central hub 64 from which a threaded mounting stud or shank 65, or other type of securing device such as a pin or a clamp, projects outwardly. The mounting member or plate 56, rods 58 and frame 62 together define a support frame referred to, in general, by the reference numeral 66. A cylindrical filter cartridge 70 may be telescoped over the support frame 66 from the end thereof remote from the plate 56. The support frame 66 additionally includes diagonal bracing rods 68 extending from the ends of each of the rods 58 adjacent the plate 56 to the hub 64.

Each generally cylindrical, and/or tubular, filter cartridge 70 comprises a substantially rigid wall portion, i.e. a jacket or mantle. The lower end of the cartridge is closed by a plane end wall portion. The other, upper end and the interior of the filter cartridge are generally open, i.e. empty and free with the exception of the parts of the support frame 66 protruding into the hollow interior of the filter cartridge 70. At least the generally cylindrical wall portion or jacket or mantle of each filter cartridge 70 is gas-permeable and consists for example of a material available under the trade name GORE-TEX membran-type. Filter cartridges of this configuration are also available under this trade name and are well-known and conventionally used in dust collectors, for example.

The end wall portion provided at the lower end of the filter cartridge 70 is provided with a central hole adapted to let penetrate one of the studs or shanks 65. Each filter cartridge is removable telescoped over each support frame 66 and removably secured thereon by a hand nut 72 threadedly engaged with the associated stud or shank 65, or by some other securing device. The axes of the filter cartridges 70 form for instance an angle with the vertical axis of the housing of the apparatus so that the filter cartridges 70 are inclined downwards from the inlet ends 32 of the outlet fittings 30.

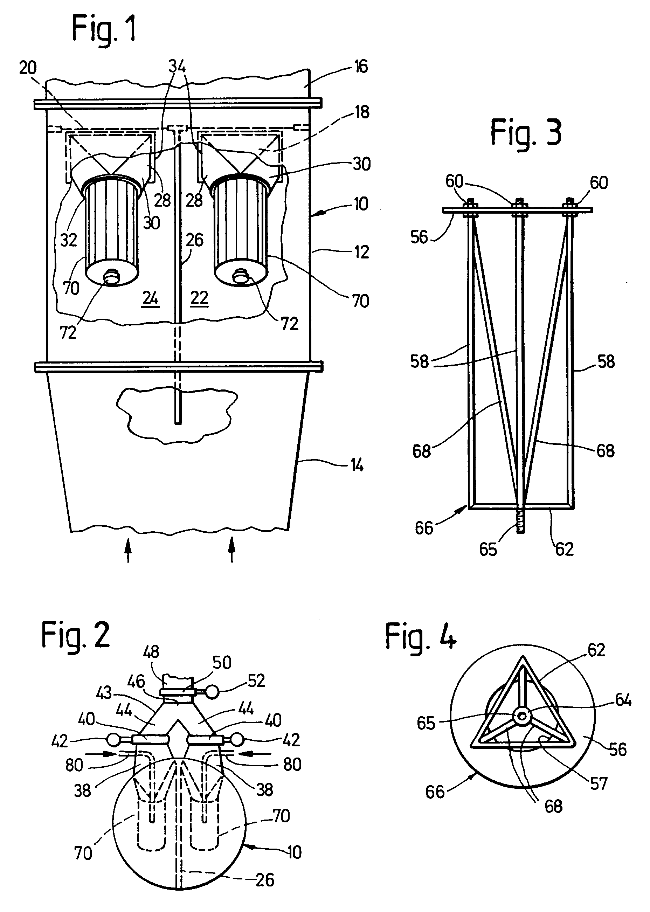

As may be seen from Figure 1, the partition 26 that divides the filter housing extends downwardly and appreciably into the upper end of the expansion and/or processing chamber 14. This feature supports an important part of the operation of the instant invention, as will be described below. Alternatively, the partition 26 may be divided at the juncture between the filter housing 12 and the processing and/or expansion chamber 14 to enable the processing and/or expansion chamber 14 to be easily seperated from the filter housing 12. In such case, the portion of the partition in the processing and/or expansion chamber 14 will extend diametrically across the top part of the chamber 14 and "mate" with the partition of the filter housing. Gasketing would be provided between the edges of the "mated" partitions.

The apparatus comprises processing gas conveying means comprising a pump (not shown) for passing processing gas - such as air - upwardly through the chamber 14 and through the filter cartridges. The apparatus comprises also cleaning gas input means comprising for instance a compressor (not shown), valves (not shown) and cleaning gas supply lines 80 for introducing cleaning gas into the interior of the filter cartridges. The supply lines 80 may open for instance directly into the interior of the filter catridges 70.

During operation of the apparatus 10, both filter cartridges 70 may be operational in that processing air or another processing gas being drawn or blown upwardly from the processing and/or expansion chamber 14 passes into the upper section or filter housing 12 for discharge therefrom through the gas outlets 28. However, the discharging processing gas must pass through the gas-permeable part of the wall of the filter cartridges 70 into the interior thereof and then through the open end of the filter cartridges and through the apertures 57 of the mounting members or plates 56 into the gas outlets 28. After an indeterminate period of operation, the external surfaces of the filter cartridges 70 accumulate fine particulate materials that are filtered out of the processing, i.e. fluidizing gas.

When it is desired to clean the filter cartridges 70, a first of the valves 40 is closed thereby terminating the out flow of processing gas from the corresponding downwardly opening chamber in which the associated filter cartridge is disposed. This renders the downwardly opening chamber relatively "dead" as to gas flow therewithin. Then, cleaning gas - such as compressed air - is supplied to the corresponding gas supply line 80, Figure 2, wherein cleaning gas under pressure passes, or is pulsed, through the supply line 80 into the interior of the now inoperative filter cartridge and through the filter walls to blow coating material or other particulate material from the external surfaces of the filter cartridge. The supply line 80 terminates within the filter cartridge with a nozzle (not shown) to uniformly disperse the cleaning gas. The discharged materials then fall downwardly through the "dead" chamber and also downwardly through the corresponding upper portion of the expansion or processing chamber 14 and then to a level below the partition 26 into the fluidized bed region of the expansion chamber. The partition 26 serves to enable the fine particles to be discharged without impedance from the processing gas flow and prevents the falling particles from being drawn onto the other filter cartridge. Permitting the particles to fall into the fluidized bed results in a more efficient utilization of the materials and coating being processed, as well as the lessening of filter clogging. The operation time interval between required changing of the filter cartridges 70 is increased.

The cleaning gas pulsing of one cartridge, with its corresponding valve 40 being closed, operates intermittently such that, after cleaning, the valve is opened, cleaning gas pulsing stops, and the adjacent filter cartridge may then be cleaned in the same manner. Obviously, there may be a significant pause or delay between the cleaning of one cartridge and the other cartridges. It should be apparent that multiple filter cartridges could be employed in the divided filter housing, each of which are simultaneously cleaned. Cleaning of all cartridges at the same time may be accomplished if the fluidization is temporarily interrupted.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

For instance, it would perhaps be possible to connect the cleaning gas supply lines 80 with the exhaust fittings 38 between the inlet ends 32 and the on/off valves 40.

## Claims

1. Apparatus for moving and treating particles, comprising a chamber (14) that serves for accommodating the particles and, positioned above said chamber (14), a filter housing (12) said filter housing (12) including partition means for dividing the interior of the filter housing (12) into separate filter housing compartments (22, 24), wherein at least one filter element for filtration of the gas leaving the chamber (14) is mounted in each filter housing compartment (22, 24) and connected with a gas outlet (28) associated to the concerned filter housing compartment (22, 24), wherein means are provided for passing processing gas upwardly through said chamber (14) and the particles accommodated therein and through the filter elements to the gas outlets (28) and wherein gas flow on/off valve means are operatively associated with each gas outlet (28) for selectively opening and closing the gas outlet (28) downstream from the or each associated filter element, characterised thereby that each filter element comprises a filter cartridge (70), that each filter cartridge (70) has an end connected with one of the gas outlets (28) in such a manner that processing gas can flow from the interior of the filter cartridge (70) into the gas outlet (28), that the gas outlets (28) and the associated gas flow on/off valve means are connected with a discharge duct (48) including a gas flow modulating control valve (50), that the filter housing compartments (22, 24) are opening downwardly, that the partition means projects below the filter cartridges (70) into the chamber (14), that there are provided gas input means for selectively introducing cleaning gas into the interior of the filter cartridges (70) for cleaning the filter cartridges (70) and that the gas flow on/off valve means are adapted to close a gas outlet (28) during the introduction of cleaning gas into the interior of an associated filter cartridge (70).

2. Apparatus according to claim 1, characterised thereby that the filter housing (12) and the chamber (14) are detachably connected.

3. Apparatus according to claim 1 or 2, characterised thereby that the chamber (14) comprises an expansion section that is adjacent to the filter housing (12), and has an interior widening upwards and that said partition means projects in an upper portion of said expansion section.

4. Apparatus according to any of claims 1 to 3, characterised thereby that said means for passing processing gas upwardly through said chamber (14) are adapted to fluidize at least a part of the particles to be treated so that the particles form a fludized bed within said chamber (14) and/or that there is provided a rotor with a disc rotatable around a vertical axis for moving particles lying on the disc.

5. Apparatus according to any of claims 1 to 4, characterised thereby that said filter housing (12) is cylindrical, and that said partition means comprises a single partition (26) disposed substantially along a diametric plane of said filter housing (12), whereby said compartments (22, 24) are each generally semi-circular in transverse cross section.

6. Apparatus according to any of claims 1 to 5, characterised thereby that there is provided a tubular, substantially open fitting (30) associated with the gas outlets (28) projecting into the interior of the filter housing (12) and that said end of each filter cartridge (70) is mounted on one of the tubular fittings (30).

7. Apparatus according to claim 6, characterised thereby that each of said tubular fittings (30) includes an inlet end (32) adapted to let enter the processing gas, that a support frame (66) is mounted on the inlet end (32), that the support frame (66) includes peripherally spaced rods (58) being parallel to each other and projecting away from the inlet end (32) of the corresponding tubular fitting (30), that the ends of said rods (58) remote from said inlet end (32) are joined by a frame (62) including a central mounting hub (64), that a mounting shank (65) projects outwardly of said central mounting hub (64), that each filter cartridge (70) is telescopingly received over the rods (58) of one of said support frames (56) and has an axis parallel to the rods (58) and that means for removably securing said filter cartridges (70) to said mounting shanks (65) are provided.

8. Apparatus according to claim 7, characterised thereby that each inlet end (32) of each of said tubular fittings (30) is circular, that each support frame (66) includes a circular mounting member (56) mounted to the corresponding inlet end (32), that the mounting member (56) comprises an aperture (57) defining a passage for the gas, that each support frame (66) comprises three of said rods (58) fastened to the mounting member (56) and that the frame (62) joining said ends of the rods (58) is triangular, wherein the mounting member (56) comprises for instance a circular mounting plate.

9. Apparatus according to any of claims 1 to 8, characterised thereby that only one gas outlet (28) is associated to each filter housing compartment (22, 24) and that only one filter cartridge (70) is mounted in each filter housing compartment (22, 24).

10. Apparatus according to any of claims 1 to 9, characterised thereby that each filter cartridge (70) projects downwardly away from the associated and adjacent gas outlet (28) into the interior of the filter housing (12).

11. Apparatus according to any of claims 1 to 10, characterised thereby that the partition means comprises at least one vertical partition (26) and extend up to the upper closed end of the filter housing interior containing the filter cartridges (70).

12. Apparatus according to any of claims 1 to 11, characterised thereby that the gas flow on/off valve means comprise a butterfly valve (40) for each gas outlet (28).

13. Apparatus according to claim 12, characterised thereby that each butterfly valve (40) comprises a remotely operable actuator (42).

14. Apparatus according to any of claims 1 to 13, characterised thereby that each of the gas outlets (28) opens outwardly of the filter housing (12) into an exhaust fitting (38) projecting outwardly from the filter housing (12), that the exhaust fitting (38) discharges into a collection fitting (43) including multiple inlets and a single outlet, that the gas flow on/off valve means associated with each of said gas outlets (28) include a valve (40) for on/off gas flow through said exhaust fitting (38) and that said single outlet opens into the discharge duct (48).

15. Apparatus according to claim 14, characterised thereby that the flow modulating control valve (50) comprises a remotely operable actuator (52).

## Patentansprüche

1. Vorrichtung zum Bewegen und Behandeln von Teilchen, mit einer zum Aufnehmen der Teilchen dienenden Kammer (14) und einem oberhalb der Kammer (14) angeordneten Filtergehäuse (12), das Trennmittel zum Unterteilen des Inneren des Filtergehäuses (12) in separate Filtergehäuse-Kompartimente (22, 24) aufweist, wobei in jedem Filtergehäuse-Kompartiment (22, 24) mindestens ein Filterelement zum Filtrieren des die Kammer (14) verlassenden Gases angeordnet und mit einem dem betreffenden Filtergehäuse-Kompartiment (22, 24) zugeordneten Gasauslass (28) verbunden ist, wobei Mittel vorhanden sind, um Prozessgas aufwärts durch die Kammer (14) und die in dieser vorhandenen Teilchen und durch die Filterelemente hindurch zu den Gasauslässen (28) strömen zu lassen, und wobei Gasstrom-Absperr-Ventilmittel in Wirkverbindung mit jedem Gasauslass (28) stehen, um den Gasauslass (28) stromabwärts von dem bzw. jedem zugeordneten Filterelement selektiv zu öffnen oder zu schliessen, dadurch gekennzeichnet, dass jedes Filterelement eine Filterpatrone (70) aufweist, dass jede Filterpatrone (70) ein derart mit einem der Gasauslässe (28) verbundenes Ende hat, dass Prozessgas aus dem Innern der Filterpatrone (70) in den Gasauslass (28) strömen kann, dass die Gasauslässe (28) und die zugeordneten Gastrom-Absperr-Ventilmittel mit einer ein Regulierventil (50) aufweisenden Ableitung (48) verbunden sind, dass die Filtergehäuse-Kompartimente (22, 24) gegen unten offen sind, dass die Trennmittel unter die Filterpatronen (70) in die Kammer (14) hinabragen, dass Gaseinführmittel zum selektiven Einführen von Reinigungsgas in das Innere der Filterpatronen (70) zum Reinigen der Filterpatronen (70) vorhanden sind und dass die Gasstrom-Absperr-Ventilmittel ausgebildet sind, um einen Gausauslass (28) während der Einführung von Reinigungsgas in das Innere einer zugeordneten Filterpatrone (70) zu schliessen.

2. Vorrichtung nach Anspruch 1, dadurch gekennzeichnet, dass das Filtergehäuse (12) und die Kammer (14) lösbar verbunden sind.

3. Vorrichtung nach Anspruch 1 oder 2, dadurch gekennzeichnet, dass die Kammer (14) einen Expansionsabschnitt aufweist, der dem Filtergehäuse (12) benachbart ist und ein sich nach oben erweiterndes Inneres hat, und dass die Trennmittel in einen oberen Teil des Expansionsabschnitts hineinragen.

4. Vorrichtung nach einem der Ansprüche 1 bis 3, dadurch gekennzeichnet, dass die genannten Mittel, um Prozessgas aufwärts durch die Kammer (14) strömen zu lassen, ausgebildet sind, um mindestens einen Teil der zu behandelnden Teilchen zu fluidisieren, so dass die Teilchen ein Fliessbett in der Kammer (14) bilden, und/oder dass ein Rotor mit einer um eine vertikale Achse drehbaren Scheibe vorhanden ist, um auf der Scheibe liegende Teilchen zu bewegen.

5. Vorrichtung nach einem der Ansprüche 1 bis 4, dadurch gekennzeichnet, dass das Filtergehäuse (12) zylindrisch ist und dass die Trennmittel einen einzelnen, im wesentlichen entlang einer diametralen Ebene des Filtergehäuses (12) angeordneten Raumteiler (26) aufweisen, wobei jedes der genannten Kompartimente (22, 24) im Querschnitt im allgemeinen halbkreisförmig ist.

6. Vorrichtung nach einem der Ansprüche 1 bis 5, dadurch gekennzeichnet, dass ein röhrenartiges, im wesentlichen offenes, den Gasauslässen (28) zugeordnetes, in das Innere des Filtergehäuses (12) hineinragendes Verbindungsstück (30) vorhanden ist und dass das genannte Ende jeder Filterpatrone (70) an einem der röhrenartigen Verbindungsstücke (30) montiert ist.

7. Vorrichtung nach Anspruch 6 dadurch gekennzeichnet, dass jedes der röhrenartigen Verbindungsstücke (30) ein zum Einlassen des Prozessgases ausgebildetes Einlassende (32) aufweist, dass ein Traggerüst (66) am Einlassende (32) montiert ist, dass das Traggerüst (66) entlang dem Umfang voneinander in Abstand stehende, zueinander parallele, vom Einlassende (32) des betreffenden , röhrenartigen Verbindungsstücks (30) wegragende Stäbe (58) aufweist, dass die von den Einlassenden (32) entfernten Enden der Stäbe (58) mittels eines eine zentrale Montage-Nabe (64) aufweisenden Rahmens (62) verbunden sind, dass ein Montage-Schaft (65) nach aussen von der zentralen Montage-Nabe (64) wegragt, dass jede Filterpatrone (70) über die Stäbe (58) von einem der Traggerüste (66) gesteckt ist und eine zu den Stäben (58) parallele Achse hat und dass Mittel zum lösbaren Befestigen der Filterpatronen (70) an den Montage-Schäften (65) vorhanden sind.

8. Vorrichtung nach Anspruch 7, dadurch gekennzeichnet, dass jedes Einlassende (32) von jedem der röhrenartigen Verbindungsstücke (30) kreisförmig ist, dass jedes Traggerüst (66) ein kreisförmiges, am entsprechenden Einlassende (32) montiertes Montage-Organ (56) aufweist, dass das Montage-Organ (56) eine einen Durchgang für das Gas bildende Öffnung (57) aufweist, dass jedes Traggerüst (56) drei der genannten, am Montage-Organ (56) befestigte Stäbe (58) aufweist und dass der die genannten Enden der Stäbe (58) verbindende Rahmen (62) dreieckig ist, wobei das Montage-Organ (56) zum Beispiel eine kreisförmige Montage-Platte aufweist.

9. Vorrichtung nach einem der Ansprüche 1 bis 8, dadurch gekennzeichnet, dass jedem Filtergehäuse-Kompartiment (22, 24) nur ein Gasauslass (28) zugeordnet ist und dass in jedem Filtergehäuse-Kompartiment (22, 24) nur eine Filterpatrone (70) eingebaut ist.

10. Vorrichtung nach einem der Ansprüche 1 bis 9, dadurch gekennzeichnet, dass jede Filterpatrone (70) vom zugeordneten und benachbarten Gasauslass (28) weg nach unten in das Innere des Filtergehäuses (12) ragt.

11. Vorrichtung nach einem der Ansprüche 1 bis 10, dadurch gekennzeichnet, dass die Trennmittel mindestens einen vertikalen Raumteiler (26) aufweisen und sich nach oben bis zum oberen, abgeschlossenen Ende des die Filterpatronen (70) enthaltenden Inneren des Filtergehäuses (12) erstrecken.

12. Vorrichtung nach einem der Ansprüche 1 bis 11, dadurch gekennzeichnet, dass die Gasstrom-Absperr-Ventilmittel für jeden Gausauslass (28) ein eine Klappe besitzendes Ventil (40) aufweisen.

13. Vorrichtung nach Anspruch 12, dadurch gekennzeichnet, dass jedes eine Klappe besitzende Ventil (40) ein fernsteuerbares Stellorgan (42) aufweist.

14. Vorrichtung nach einem der Ansprüche 1 bis 13, dadurch gekennzeichnet, dass jeder Gasauslass (28) gegen die Aussenseite des Filtergehäuses (12) in ein vom Filtergehäuse (12) weg nach aussen ragendes Ableit-Verhbindungsstück (38) mündet, dass das Ableit-Verbindungsstück (38) in ein Sammel-Verbindungsstück (43) mit mehreren Eingängen und einem einzigen Ausgang mündet, dass die jedem der Gasauslässe (28) zugeordneten Gasstrom-Absperr-Ventilmittel ein Ventil (40) zum Durchlassen oder Absperren eines Gasstroms durch das Ableit-Verbindungsstück (38) aufweist und dass der genannte, einzige Ausgang in die Ableitung (48) mündet.

15. Vorrichtung nach Anspruch 14, dadurch gekennzeichnet, dass das Regulierventil (50) ein fernsteuerbares Stellorgan (52) aufweist.

## Revendications

1. Appareil pour déplacer et traiter les particules, comportant une chambre (14) qui sert à recevoir les particules et un boîtier de filtre (12) positionné au-dessus de ladite chambre (14), ledit boîtier de filtre (12) comportant des moyens de séparation pour diviser l'intérieur du boîtier de filtre (12) en compartiments (22, 24) de boîtier de filtre, séparés, dans lequel au moins un élément filtrant destiné à filtrer le gaz quittant la chambre (14) est monté dans chaque compartiment (22, 24) de boîtier de filtre et est relié à une sortie de gaz (28) associée au compartiment (22, 24) de boîtier de filtre concerné, dans lequel des moyens sont agencés pour faire passer le gaz de traitement vers le haut à travers ladite chambre (14), ainsi que les particules contenues dans celui-ci, et à travers les éléments filtrants vers les sorties de gaz (28) et dans lequel des moyens formant vanne d'ouverture/fermeture de débit de gaz sont associés fonctionnellement à chaque sortie de gaz (28) pour ouvrir et fermer de manière sélective la sortie de gaz (28) située en aval de l'élément filtrant ou de chaque élément filtrant associé, caractérisé en ce que chaque élément filtrant comporte une cartouche filtrante (70), chaque cartouche filtrante (70) a une extrémité qui est reliée à l'une des sorties de gaz (28) d'une manière telle que le gaz de traitement peut s'écouler depuis l'intérieur de la cartouche filtrante (70) jusque dans la sortie de gaz (28), les sorties de gaz (28) et les moyens formant vanne d'ouverture/fermeture de débit de gaz associés sont reliés à un conduit de décharge (48) comportant une vanne de commande modulante de débit gazeux (50), les compartiments (22, 24) de boîtier de filtre s'ouvrent vers le bas, les moyens de séparation font saillie au-dessous des cartouches filtrantes (70) jusque dans la chambre (14), des moyens d'entrée de gaz sont agencés pour introduire de manière sélective un gaz de nettoyage à l'intérieur des cartouches filtrantes (70) pour nettoyer les cartouches filtrantes (70) et des moyens formant vanne d'ouverture/fermeture de débit de gaz sont adaptés pour fermer une sortie de gaz (28) pendant l'introduction du gaz de nettoyage à l'intérieur d'une cartouche filtrante (70) associée.

2. Appareil selon la revendication 1, caractérisé en ce que le boîtier de filtre (12) et la chambre (14) sont reliés de manière démontable.

3. Appareil selon la revendication 1 ou 2, caractérisé en ce que la chambre (14) comporte un tronçon de détente qui est adjacent au boîtier de filtre (12), et a une partie intérieure s'élargissant vers le haut, et en ce que lesdits moyens de séparation font saillie dans une partie supérieure dudit tronçon de détente.

4. Appareil selon l'une quelconque des revendications 1 à 3, caractérisé en ce que lesdits moyens pour faire passer le gaz de traitement vers le haut à travers ladite chambre (14) sont adaptés pour fluidiser au moins une partie des particules à traiter de sorte que les particules forment un lit fluidisé à l'intérieur de ladite chambre (14) et/ou en ce que l'on voit un rotor muni d'un disque pouvant tourner autour d'un axe vertical pour déplacer les particules situées sur le disque.

5. Appareil selon l'une quelconque des revendications 1 à 4, caractérisé en ce que ledit boîtier de filtre (12) est cylindrique, et en ce que lesdits moyens de séparation comportent une séparation unique (26) disposée à peu près le long d'un plan diamétral dudit boîtier de filtre (12), de sorte que lesdits compartiments (22, 24) sont chacun généralement semi-circulaires en section transversale.

6. Appareil selon l'une quelconque des revendications 1 à 5, caractérisé en ce que l'on fournit un raccord tubulaire (30), pratiquement ouvert, associé aux sorties de gaz (28) faisant saillie à l'intérieur du boîtier de filtre (12) et en ce que ladite extrémité de chaque cartouche filtrante (70) est montée sur l'un des raccords tubulaires (30).

7. Appareil selon la revendication 6, caractérisé en ce que chacun desdits raccords tubulaires (30) comporte une extrémité d'entrée (32) adaptée pour laisser entrer le gaz de traitement, un châssis de support (66) est monté sur l'extrémité d'entrée (32), le châssis de support (66) comporte des tiges espacées de manière périphérique (58), parallèles les unes aux autres et en saillie par rapport à l'extrémité d'entrée (32) du raccord tubulaire (30) correspondant, les extrémités desdites tiges (58), éloignées de ladite extrémité d'entrée (32), sont reliées par l'intermédiaire d'un châssis (62) comportant un moyeu central de montage (64), un téton de montage (65) fait saillie vers l'extérieur dudit moyeu central de montage (64), chaque cartouche filtrante (70) est reçue de manière emboîtée sur les tiges (58) de l'un desdits châssis de support (56) et a un axe parallèle aux tiges (58) et des moyens sont prévus pour fixer de manière amovible lesdites cartouches filtrantes (70) auxdits tétons de montage (65).

8. Appareil selon la revendication 7, caractérisé en ce que chaque extrémité d'entrée (32) de chacun desdits raccords tubulaires (30) est circulaire, chaque châssis de support (66) comporte un élément de montage circulaire (56) monté sur l'extrémité d'entrée (32) correspondante, l'élément de montage (56) comporte une ouverture (57) définissant un passage pour le gaz, chaque châssis de support (66) comporte trois desdites tiges (58) fixées à l'élément de montage (56) et le châssis (62) reliant lesdites extrémités des tiges (59) est triangulaire, l'élément de montage (56) comportant par exemple une plaque de montage circulaire.

9. Appareil selon l'une quelconque des revendications 1 à 8, caractérisé en ce que seule une sortie de gaz (28) est associée à chaque compartiment (22, 24) du boîtier de filtre et en ce que seule une cartouche filtrante (70) est montée dans chaque compartiment (22, 24) du boîtier de filtre.

10. Appareil selon l'une quelconque des revendications 1 à 9, caractérisé en ce que chaque cartouche filtrante (70) fait saillie vers le bas, à partir de la sortie de gaz (28) associée et adjacente, à l'intérieur du boîtier de filtre (12).

11. Appareil selon l'une quelconque des revendications 1 à 10, caractérisé en ce que les moyens de séparation comportent au moins une séparation verticale (26) et s'étendent vers le haut jusqu'à l'extrémité fermée supérieure de l'intérieur du boîtier de filtre contenant les cartouches filtrantes (70).

12. Appareil selon l'une quelconque des revendications 1 à 11, caractérisé en ce que les moyens formant vanne d'ouverture/fermeture de débit de gaz comportent une vanne papillon (40) pour chaque sortie de gaz (28).

13. Appareil selon la revendication 12, caractérisé en ce que chaque vanne papillon (40) comporte un actionneur (42) pouvant être commandé à distance.

14. Appareil selon l'une quelconque des revendications 1 à 13, caractérisé en ce que chacune des sorties de gaz (28) débouche à l'extérieur du boîtier de filtre (12) dans un raccord d'échappement (38) faisant saillie vers l'extérieur à partir du boîtier de filtre (12), le raccord d'échappement (38) se décharge dans un raccord collecteur (43) comportant plusieurs entrées et une sortie unique, les moyens formant vanne d'ouverture/fermeture de débit de gaz associés à chacune desdites sorties de gaz (28) comportent une vanne (40) pour ouvrir/fermer le débit de gaz à travers ledit raccord d'échappement (38) et en ce que ladite sortie unique débouche dans le conduit de décharge (48).

15. Appareil selon la revendication 14, caractérisé en ce que la vanne de commande de débit modulante (50) comporte un actionneur (52) pouvant être commandé à distance.
